# EUROPEAN PATENT SPECIFICATION

(11) **EP 3 511 242 B1**
(45) Date of publication and mention of the grant of the patent: **02.08.2023**
(21) Application number: 18151561.0
(22) Date of filing: 15.01.2018
(51) Int. Cl.: B64C 17/02, B64C 17/04, B64C 29/00, B64D 11/00, G05D 1/06, G05D 1/08, B64C 27/22, B64U 101/60

(54) **AN AIRCRAFT WITH DISPLACEABLE CABIN**
FLUGGERÄT MIT VERSCHIEBBARER KABINE
AERONEF AVEC UNE CABINE DEPLACABLE

(43) Date of publication of application: 17.07.2019
(73) Proprietor: Airbus Defence and Space GmbH, 82024 Taufkirchen (DE)
(72) Inventor: Holzer, Werner, 85053 Ingolstadt (DE)
(74) Representative: LKGLOBAL Lorenz & Kopf Patentanwalt Attorney at Law PartG mbB

(56) References cited:
- EP-A1- 3 263 445
- US-A- 3 096 044
- US-A- 3 985 320

## Description

### Technical Field

Various embodiments relate generally to an aircraft and a cabin. In particular, the invention relates to a method of positioning a cabin at various phases of an aircraft for changing a pitch of the aircraft.

### Background

The cabin of an aircraft is conventionally fixed to the aircraft and is an integral part of the aircraft. The cabin is used to carry the payload and the distribution of the payload is usually restricted due to the design constraints. For an aircraft it is necessary to maintain the position of the center of gravity at an optimum position as it has a direct effect on the maneuverability, controllability and drag force of the aircraft. In a commercial airliner, the cruise phase is critical, as it is the longest phase for an aircraft. The weight of such an aircraft is distributed in such a way that the center of gravity will be at an optimum position for the cruise phase.

In certain aircraft, the fuel carried by the aircraft is transferred between the aft fuel storage tank and the forward fuel storage tank to shift the center of gravity of the aircraft to a position that will be favorable for a particular phase of flight. The shift in center of gravity in such case is often restricted by the size of the fuel tanks and hence the benefit from shifting the center of gravity is as high as it could be. Payload weight being not part of the fixed structural weight can be used to shift the center of gravity of the aircraft, but was not done yet since the cabin which is used for carrying the payload is fixed and integral part of the aircraft.

EP 3 263 445 describes an aircraft including a flying frame having an airframe, a propulsion system attached to the airframe and a flight control system operably associated with the propulsion system, wherein the flying frame has a vertical takeoff and landing mode and a forward flight mode. A pod assembly is selectively attachable to the flying frame such that the flying frame is rotatable about the pod assembly, wherein the pod assembly remains in a generally horizontal attitude during vertical takeoff and landing, forward flight and transitions therebetween.

However, there is a need for further improvements of the flight operation of the aircraft.

### Summary

The problem of the present invention is solved by the subject matters of claim 1.

According to the present invention, a method for changing a pitch of an aircraft is presented.

The method for changing the pitch of the aircraft involves the step of moving a cabin along a length of the aircraft. The cabin is placed within a hollow section of the aircraft. The cabin is moved using a displacement unit. The displacement unit includes at least a drive unit and a carriage. The drive unit is configured to move the carriage in at least along the length of the aircraft. The cabin is coupled to the carriage using a shaft. The cabin is configured to rotate about an axial axis of the shaft. The method further involves a step of regulating the movement of the carriage along the length of the aircraft by a guide. The method further includes keeping the cabin in a horizontal position with respect to the ground. In a first embodiment, a center of gravity of the cabin is designed to be below the axial axis of the shaft so that the cabin tends to stay in the horizontal position with respect to the ground due to inertia. The method of the first embodiment further includes restricting an oscillation of the cabin about the axial axis of the shaft using a clutch. The method of the first embodiment finally includes controlling at least one of the pitch of the aircraft and a roll of the aircraft using a thruster.

However, the skilled person will understand that these steps can be carried out in any other suitable order. Alternatively, one or more of the steps may be carried out concurrently.

These and other aspects of the present invention will become apparent from and be elucidated with reference to the embodiments described hereinafter.

### Brief Description of the Drawings

In the drawings, like reference characters generally refer to the same parts throughout the different views. The drawings are not necessarily to scale, emphasis instead generally being placed upon illustrating the principles of the invention. In the drawings, the left-most digit(s) of a reference number can identify the drawing in which the reference number first appears. The same numbers can be used throughout the drawings to reference like features and components. In the following description, various embodiments of the invention are described with reference to the following drawings, in which:
- FIG. 1: shows schematically an aircraft;
- FIG. 2: shows schematically cross-section view A-A as shown in Fig. 1; and
- FIG. 3: shows schematically position of cabin at various phase of the aircraft;

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

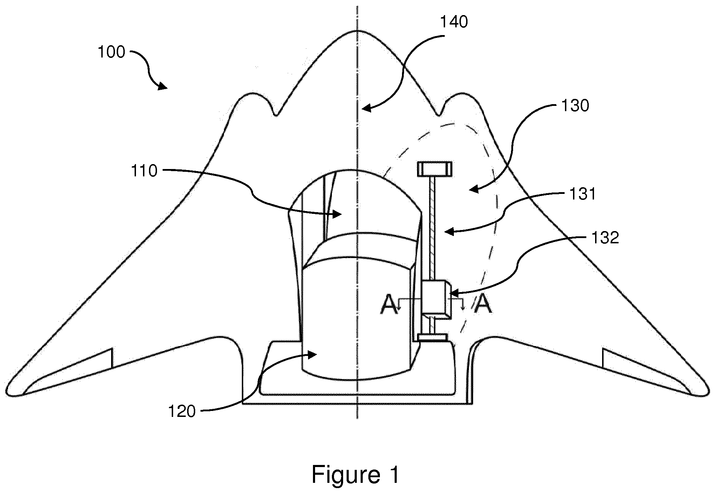

Figure 1 shows schematically an exemplary aircraft 100. The aircraft includes a hollow section 110. The hollow section 110 in this exemplary illustration is substantially at the middle of the aircraft 100. A cabin 120 is placed in the hollow section 110 as shown in the figure. The length of the cabin 120 is preferably smaller than the length of the hollow section 110, so that the cabin 120 can move along the length of the hollow section 110. The length of the hollow section 110 is defined to be along the length 140 of the aircraft 100. The movement of the cabin 120 along the length of the aircraft 100 is performed using the displacement unit 130. The displacement unit 130 is placed on either side of the cabin 120, within the aircraft 100. In this exemplary illustration, the displacement unit 130 on the right is displayed by means of the section of the aircraft being cut (represented by dotted line). A similar displacement unit is also present on the left side of the aircraft, which is not visible in the figure. The displacement unit 130 includes a drive unit 131 and a carriage 132. The drive unit 131in the figure is a screw type linear actuator. The drive unit 131 comprises a screw, which is in contact with the carriage 132 and an actuator which rotates the screw. The rotation of the screw causes the carriage 132 to move along the length of the screw and hence along the length 140 of the aircraft 100. The carriage 132 is attached to the cabin 120 by means of a shaft, which is not visible in the figure.

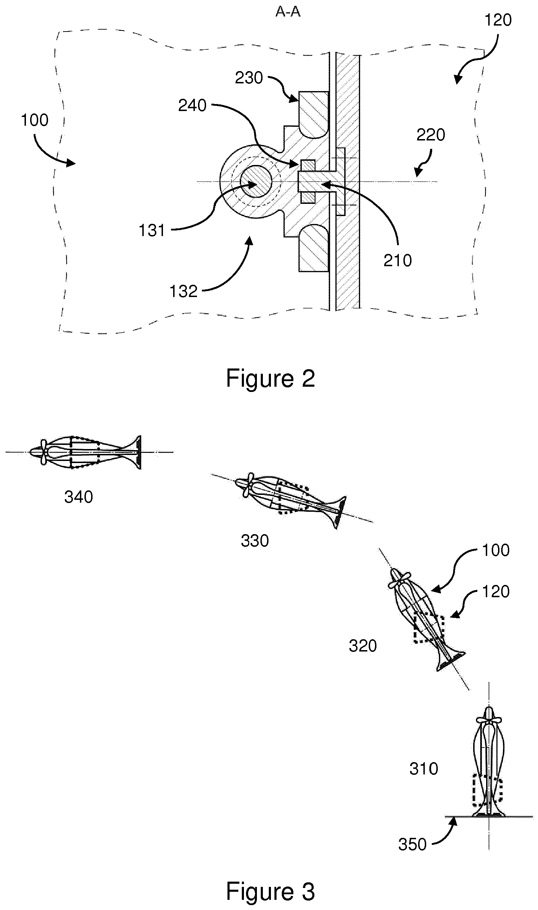

Figure 2 shows schematically an exemplary illustration of the cross-section view A-A in figure 1. In this illustration, the screw of the drive unit 131 is in contact with the carriage 132 by going through the carriage 132. The carriage 132 has internal thread which matches with the thread of the screw. The carriage 132 is attached to the cabin 120 by means of a shaft 210. The shaft 210 is rigidly attached to the cabin 120 and freely attached to the carriage 132, such that the shaft 210 can rotate freely about its axial axis 220. A clutch 240 is arranged at the free end of the shaft 210 to avoid oscillation of the cabin 120. The clutch 240 illustrated in the figure is a simple brake pad, which controls oscillation of the cabin 120 by friction. The carriage 132 is supported on guide 230. The guide 230 runs along the length of the aircraft 100, parallel to the screw of the drive unit 131. The guide 230 has higher strength compared to the screw of the drive unit 131, and hence can support the weight of the cabin 120. Further, the guide 230 ensures that the cabin 120 moves along the length of the aircraft 100, irrespective of change in center of gravity of the cabin 120 along the lateral direction of the aircraft 100, due to movement of payload such as passengers or flight crew.

Figure 3 shows schematically an exemplary position of cabin 120 at various phases 310, 320, 330, and 340 of the aircraft 100. The aircraft 100 in this exemplary illustration is a tail-sitter type of aircraft. Various phases of the aircraft 100 as illustrated in the figure are take-off 310, climb 320 and 330, and cruise 340. During the phase of take-off 310, the aircraft 100 is on the ground 350 sitting on its tail. Even though the aircraft 100 is oriented vertical to the ground 350, the cabin 120 remains horizontal with respect to the ground 350. The cabin 120 is at the most aft possible position along the length of the aircraft, which is also the closest possible position to the ground 350. During the climb phase 320 and 330, the aircraft 100 begins its transition from take-off 310 towards cruise 340, and rotates about its lateral axis to change from vertical orientation with respect to ground towards horizontal orientation. During these phases of climb 320 and 330, the cabin 120 moves forward from most aft possible position at take-off 310. The cabin 120 maintains its horizontal orientation with respect to ground independent of the rotation of the aircraft 100. When the aircraft 100 reaches the cruise phase 340, the aircraft 100 is horizontal to the ground 350 and the cabin 120 reaches the most forward possible position. The aircraft 100 can be designed such that the center of gravity of the aircraft can be at an optimal location for cruise when the cabin 120 in at the most forward position possible. The cabin 120 can be locked with the aircraft 100 throughout the cruise. The cabin 120 moves during descent phase, not shown in the figure, similar to that of climb 320 and 330 but will move from most forward position possible towards the most aft position possible. The cabin will be at the most aft position possible, similar to the take-off phase 310, during the landing phase which is also not shown in the figure.

## Claims

1. Method of positioning a cabin at various phases during a flight of an aircraft (100) for changing a pitch of the aircraft (100) comprising the steps of:
- moving a cabin (120) along a length (140) of the aircraft (100); wherein the cabin (120) is placed within a hollow section (110) of the aircraft (100);
wherein the cabin (120) is moved using a displacement unit (130); wherein the displacement unit (130) includes at least a drive unit (131) and a carriage (132);
wherein the drive unit (131) is configured to move the carriage at least along the length (140) of the aircraft (100); wherein the cabin (120) is coupled to the carriage (132) using a shaft (210);
wherein the cabin (120) is configured to rotate about an axial axis (220) of the shaft (210);
- keeping the cabin (120) in a horizontal position with respect to the ground (350) independent of the rotation of the aircraft;
wherein it is provided:
i) regulating the movement of the carriage (132) along the length (140) of the aircraft (100) by a guide (230);
wherein a center of gravity of the cabin (120) is designed to be below the axial axis (220) of the shaft (210) so that the cabin (120) tends to stay in the horizontal position with respect to the ground (350) due to inertia;
restricting an oscillation of the cabin (120) about the axial axis (220) of the shaft (210) using a clutch (240); and
controlling at least one of the pitch of the aircraft (100) and a roll of the aircraft (100) using a thruster;
affecting at least a pitch of the aircraft (100) during flight by the movement of the cabin (120) from the aft-most position along the length (140) of the aircraft (100) when transitioning from vertical take-off (310) orientation towards horizontal cruise (340) orientation; or
wherein it is provided:
ii) during a phase of take-off (310), the aircraft is on a ground sitting on its tail; wherein the cabin is at the most aft possible position along the length of the aircraft, which is also the closest possible position to the ground;
during a climb phase (320 and 330), the aircraft begins its transition from the take-off phase towards a cruise phase and rotates about its lateral axis to change from a vertical orientation with respect to ground towards a horizontal orientation; wherein during these phases of climb, the cabin moves forward from most aft possible position at take-off;
when the aircraft reaches the cruise phase (340), the aircraft is horizontal to the ground and the cabin reaches the most forward possible position; and
wherein the cabin moves during a descent phase similar to that of the climb, but will move from most forward position possible towards the most aft position possible; and wherein the cabin will be at the most aft position possible, similar to the take-off phase, during a landing phase.

## Patentansprüche

1. Verfahren zum Positionieren einer Kabine in verschiedenen Phasen während eines Fluges eines Fluggeräts (100), um die Nicklage des Fluggeräts (100) zu ändern, umfassend die folgenden Schritte:
- Bewegen einer Kabine (120) entlang einer Länge (140) des Fluggeräts (100), wobei die Kabine (120) innerhalb eines hohlen Abschnitts (110) des Fluggeräts (100) angeordnet ist;
wobei die Kabine (120) mittels einer Verschiebeeinheit (130) bewegt wird, wobei die Verschiebeeinheit (130) mindestens eine Antriebseinheit (131) und einen Schlitten (132) enthält;
wobei die Antriebseinheit (131) dazu ausgelegt ist, den Schlitten mindestens entlang der Länge (140) des Fluggeräts (100) zu bewegen, wobei die Kabine (120) mit dem Schlitten (132) mittels einer Welle (210) gekoppelt ist;
wobei die Kabine (120) dazu ausgelegt ist, sich um eine axiale Achse (220) der Welle (210) zu drehen;
- Halten der Kabine (120) in einer horizontalen Position in Bezug auf den Boden (350) unabhängig von der Drehung des Fluggeräts;
wobei vorgesehen ist:
i) Regeln der Bewegung des Schlittens (132) entlang der Länge (140) des Fluggeräts (100) durch eine Führung (230);
wobei ein Schwerpunkt der Kabine (120) so ausgelegt ist, dass er unterhalb der axialen Achse (220) der Welle (210) liegt, sodass die Kabine (120) aufgrund der Trägheit dazu neigt, in der horizontalen Position in Bezug auf den Boden (350) zu bleiben;
Begrenzen einer Schwingung der Kabine (120) um die axiale Achse (220) der Welle (210) mittels einer Kupplung (240); und
Steuern mindestens eines von der Nicklage des Fluggeräts (100) und einer Rolllage des Fluggeräts (100) mittels einer Schubdüse;
Beeinflussen mindestens einer Nicklage des Fluggeräts (100) während des Fluges durch die Bewegung der Kabine (120) von der hintersten Position entlang der Länge (140) des Fluggeräts (100) beim Übergang von der vertikalen Ausrichtung beim Start (310) zur horizontalen Ausrichtung während des Reiseflugs (340); oder
wobei vorgesehen ist:
ii) während der Startphase (310) befindet sich das Fluggerät auf dem Boden und sitzt auf dem Heck, wobei sich die Kabine an der größtmöglichen hinteren Position entlang der Länge des Fluggeräts befindet, die auch die größtmögliche nahe Position zum Boden ist;
während einer Steigflugphase (320 und 330) beginnt das Fluggerät seinen Übergang von der Startphase zu einer Reiseflugphase und dreht sich um seine Querachse, um von einer vertikalen Ausrichtung in Bezug auf den Boden zu einer horizontalen Ausrichtung überzugehen, wobei sich während dieser Steigflugphasen die Kabine von der beim Start größtmöglichen hinteren Position nach vorne bewegt; wenn das Fluggerät die Reiseflugphase (340) erreicht, befindet sich das Fluggerät horizontal zum Boden, und die Kabine erreicht die größtmögliche vordere Position; und wobei sich die Kabine während einer Sinkflugphase ähnlich wie beim Steigflug bewegt, sich aber von einer größtmöglichen vorderen Position in Richtung einer größtmöglichen hinteren Position bewegt und wobei sich die Kabine während einer Landephase ähnlich wie in der Startphase in der größtmöglichen hinteren Position befindet.

## Revendications

1. Procédé de positionnement d'une cabine dans diverses phases pendant un vol d'un aéronef (100) pour changer un tangage de l'aéronef (100) comprenant les étapes de :
- déplacement d'une cabine (120) le long d'une longueur (140) de l'aéronef (100) ; dans lequel la cabine (120) est placée à l'intérieur d'une section creuse (110) de l'aéronef (100) ;
dans lequel la cabine (120) est déplacée à l'aide d'une unité de déplacement (130) ; dans lequel l'unité de déplacement (130) inclut au moins une unité d'entraînement (131) et un chariot (132) ;
dans lequel l'unité d'entraînement (131) est configurée pour déplacer le chariot au moins le long de la longueur (140) de l'aéronef (100) ; dans lequel la cabine (120) est couplée au chariot (132) à l'aide d'un arbre (210) ;
dans lequel la cabine (120) est configurée pour tourner autour d'un axe axial (220) de l'arbre (210) ;
- la conservation de la cabine (120) dans une position horizontale par rapport au sol (350) indépendamment de la rotation de l'aéronef ;
dans lequel sont fournies :
i) la régulation du mouvement du chariot (132) le long de la longueur (140) de l'aéronef (100) par un guide (230) ;
dans lequel un centre de gravité de la cabine (120) est conçu pour être en dessous de l'axe axial (220) de l'arbre (210) de sorte que la cabine (120) tend à rester dans la position horizontale par rapport au sol (350) en raison de l'inertie ;
la restriction d'une oscillation de la cabine (120) autour de l'axe axial (220) de l'arbre (210) à l'aide d'un embrayage (240) ; et
la commande d'au moins l'un du tangage de l'aéronef (100) et d'un roulis de l'aéronef (100) à l'aide d'un propulseur ;
l'affectation d'au moins un tangage de l'aéronef (100) pendant le vol par le mouvement de la cabine (120) de la position la plus vers l'arrière le long de la longueur (140) de l'aéronef (100) lors de la transition d'une orientation de décollage vertical (310) vers une orientation de croisière horizontale (340) ; ou
dans lequel sont fournis :
ii) pendant une phase de décollage (310), l'aéronef est sur un sol posé sur sa queue ; dans lequel la cabine est à sa position la plus vers l'arrière possible le long de la longueur de l'aéronef, qui est aussi la position la plus proche possible du sol ;
pendant une phase d'ascension (320 et 330), l'aéronef commence sa transition de la phase de décollage vers une phase de croisière et tourne autour de son axe latéral pour passer d'une orientation verticale par rapport au sol vers une orientation horizontale ; dans lequel pendant ces phases d'ascension, la cabine se déplace vers l'avant depuis la position la plus vers l'arrière possible au décollage ;
lorsque l'aéronef atteint la phase de croisière (340), l'aéronef est horizontal par rapport au sol et la cabine atteint la position la plus vers l'avant possible ; et dans lequel la cabine se déplace pendant une phase de descente similaire à celle de l'ascension, mais se déplacera de la position la plus vers l'avant possible vers la position la plus vers l'arrière possible ; et dans lequel la cabine sera à la position la plus vers l'arrière possible, similaire à la phase de décollage, pendant une phase d'atterrissage.
